# EUROPEAN PATENT APPLICATION

(11) **EP 4 840 712 A1**
(43) Date of publication of application: **18.11.2026**
(21) Application number: 24916546.5
(22) Date of filing: 05.11.2024
(51) Int. Cl.: B60W 30/06

(54) **AUTOMATIC PARKING METHOD AND DEVICE, VEHICLE, AND STORAGE MEDIUM**

(30) Priority: 08.01.2024 CN 202410030189
(71) Applicant: Guangzhou Automobile Group Co., Ltd., Guangzhou, Guangdong 511434 (CN)
(72) Inventor: LIANG, Jiakai, Guangzhou, Guangdong 511434 (CN); LUO, Ke, Guangzhou, Guangdong 511434 (CN); LIU, Lian, Guangzhou, Guangdong 511434 (CN); XUNYUAN, Xianwen, Guangzhou, Guangdong 511434 (CN); CHEN, Qida, Guangzhou, Guangdong 511434 (CN)
(74) Representative: Metida
(86) International application number: PCT/CN2024/129904
(87) International publication number: WO 2025/148496

(57) **Abstract**

The present application provides an automatic parking method, an apparatus, a vehicle, and a storage medium. The method includes: displaying a virtual view including the available parking space in response to detecting that an available parking space exists ahead of the vehicle during a traveling process of a vehicle; releasing the target parking space and activating a parking function in response to a long-press operation on a target parking space in the virtual view, wherein the target parking space is one of the available parking spaces; and controlling, via the parking function, the vehicle to park into the target parking space. During a traveling process of a target vehicle, by activating a parking function in response to a long-press operation on an available parking space in a virtual view of a parking scenario, automatic parking is achieved when the vehicle approaches the available parking space, eliminating the need to first stop the vehicle and then activate the parking function as required in existing solutions, and thus improving the user driving experience.

## Description

### TECHNICAL FIELD

The present application belongs to the field of vehicles, and in particular relates to an automatic parking method, an apparatus, a vehicle, and a storage medium.

### BACKGROUND

In related automatic parking methods, generally, after an available parking space is detected by a vehicle, the user is required to stop the vehicle in the vicinity of the available parking space and in a posture that meets requirements, before being able to select the desired parking space and click a start parking button to activate a parking function. The above process requires numerous complex steps, and the user's driving experience needs to be improved.

### SUMMARY

In view of the above problems, the present application proposes an automatic parking method, an apparatus, a vehicle and a storage medium to address the above problems.

In a first aspect, an embodiment of the present application provides an automatic parking method including: displaying a virtual view including the available parking space in response to detecting that an available parking space exists ahead of the vehicle during a traveling process of a vehicle; releasing the target parking space and activating a parking function in response to a long-press operation on a target parking space in the virtual view, wherein the target parking space is one of the available parking spaces; and controlling, via the parking function, the vehicle to park into the target parking space.

In a second aspect, an embodiment of the present application provides an automatic parking apparatus including a virtual view display unit, a parking function activation unit, and a parking unit. The virtual view display unit is configured to display a virtual view including the available parking space in response to detecting that an available parking space exists ahead of the vehicle during a traveling process of a vehicle. The parking function activation unit is configured to release the target parking space and activate a parking function in response to a long-press operation on a target parking space in the virtual view, wherein the target parking space is one of the available parking spaces. The parking unit is configured to control, via the parking function, the vehicle to park into the target parking space.

In a third aspect, an embodiment of the present application provides a vehicle including one or more processors, a memory, and one or more programs, wherein the one or more programs are stored in the memory and configured to be executed by the one or more processors to perform the method described above.

In a fourth aspect, an embodiment of the present application provides a computer-readable storage medium storing program codes, which, when executed, perform the method described above.

The present application provides an automatic parking method, an apparatus, a vehicle, and a storage medium. In the present method, by activating a parking function in response to a long-press operation on an available parking space in a virtual view of a parking scenario, automatic parking is achieved when the vehicle approaches the available parking space, eliminating the need to first stop the vehicle and then activate the parking function as required in existing solutions, and thus improving the user driving experience.

### BRIEF DESCRIPTION OF THE DRAWINGS

To more clearly illustrate the technical solutions in the embodiments of the present application, the accompanying drawings used in the description of the embodiments will be briefly introduced below. Obviously, the accompanying drawings described below illustrate only some embodiments of the present application. For those of ordinary skill in the art, other drawings can be obtained based on these accompanying drawings without creative efforts.
FIG. 1 shows a flowchart of an automatic parking method in an embodiment of the present application.
FIG. 2 shows a schematic diagram of a virtual view in an automatic parking method in an embodiment of the present application.
FIG. 3 shows a flowchart of an automatic parking method in an embodiment of the present application.
FIG. 4 shows an application scenario diagram of an automatic parking method in an embodiment of the present application.
FIG. 5 shows a flowchart of an automatic parking method in an embodiment of the present application.
FIG. 6 shows a structural block diagram illustrating an automatic parking method in another embodiment of the present application.
FIG. 7 shows a structural block diagram of a vehicle for executing any of the automatic parking methods in embodiments of the present application***,*** in real time.
FIG. 8 shows a storage unit for storing or carrying program codes for implementing any of the automatic parking methods in embodiments of the present application, in real time.

### DETAILED DESCRIPTION

The technical solutions in the embodiments of the present application will be clearly and completely described below in conjunction with the accompanying drawings in the embodiments of the present application. Obviously, the described embodiments are only some, not all, embodiments of the present application. Based on the embodiments in the present application, all other embodiments obtained by those of ordinary skill in the art without making creative efforts fall within the scope of protection of the present application.

It should be noted that the terms "first", "second" and the like in the specification, claims, and the drawings above of the present application are used to distinguish similar objects and are not necessarily used to describe a specific order or sequence. It should be understood that the data used in this way can be interchanged where appropriate, such that any of the embodiments of the present application described herein can be implemented in an order other than that illustrated or described. Furthermore, the terms "including" and "having" and any variations thereof are intended to cover a non-exclusive inclusion. For example, a process, method, system, product, or server including a series of steps or units is not necessarily limited to those steps or units explicitly listed, but may include other steps or units not explicitly listed or inherent to such processes, methods, products, or devices.

In some embodiment of the present application, proposed are an automatic parking method, an apparatus, a vehicle, and a storage medium. The method includes: displaying a virtual view including the available parking space in response to detecting that an available parking space exists ahead of the vehicle during a traveling process of a vehicle; releasing the target parking space and activating a parking function in response to a long-press operation on a target parking space in the virtual view, wherein the target parking space is one of the available parking spaces; and controlling, via the parking function, the vehicle to park into the target parking space. During a traveling process of a target vehicle, by activating a parking function in response to a long-press operation on an available parking space in a virtual view of a parking scenario, automatic parking can be achieved when the vehicle approaches the available parking space, eliminating the need to first stop the vehicle and then activate the parking function as required in existing solutions, and thus improving the user driving experience.

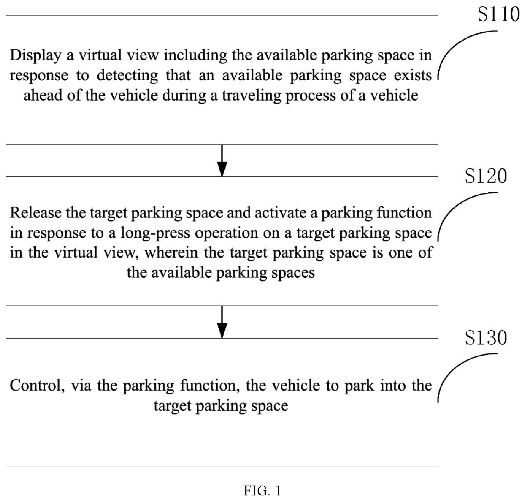

Please refer to FIG. 1. An embodiment of the preset application provides an automatic parking method including the following steps.

In step S110, a virtual view including the available parking space is displayed in response to detecting that an available parking space exists ahead of the vehicle during a traveling process of a vehicle.

In an embodiment of the present application, the virtual view is a view displayed on a display screen to show a virtualized vehicle and parking spaces, and an available parking space is a parking space having no vehicle parked therein. During the traveling process of the vehicle, side-front cameras installed on the vehicle are used to check in real time whether any parking space along the lane where the vehicle is located has a vehicle parked therein. In response to detecting that there is a parking space along the lane without any vehicle parked therein, it is determined that an available parking space exists, and parking space information corresponding to the available parking space collected by the side-front cameras is sent to a human-machine interaction subsystem, which then displays a virtual view showing the existence of the available parking space on the display screen. Here, the parking space information includes the shape and size of the parking space, the distance between the parking space and the vehicle, and the position of the parking space relative to the vehicle, and other information.

As an approach, for parking intention, a "park" button may be disposed. When the user presses the "park" button, it is determined that the user has a parking intention; alternatively, whether the user has a parking intention is determined based on acquiring voice information issued by the user. For example, if the user issues a command such as "find a parking space and prepare to park", it is determined that the user has a parking intention. No specific limitation is made herein.

In step S120, the target parking space is released and a parking function is activated in response to a long-press operation on a target parking space in the virtual view, wherein the target parking space is one of the available parking spaces.

In an embodiment of the present application, after the available parking spaces are displayed in the virtual view, if the user wants to park into one of the available parking spaces, the parking space the user intends to park into among the available parking spaces is taken as the target parking space. The user performs a long-press operation on the target parking space in the virtual view to complete the selection operation for the target parking space. In response to the user's long-press operation on the target parking space in the virtual view, the target parking space is released for the vehicle, allowing the vehicle to park into the target parking space, and the parking function is activated.

As an approach, when the user performs the long-press operation, a progress bar is displayed on the virtual display interface, indicating the progress of the long press. When the progress bar reaches the end, the long-press operation is determined to be completed, i.e., the selection of the target vehicle is completed. Generally, the duration of the progress bar for the long-press operation is set to 3 seconds. Of course, the duration of the progress bar may also be set by the user himself/herself, and no specific limitation is made herein.

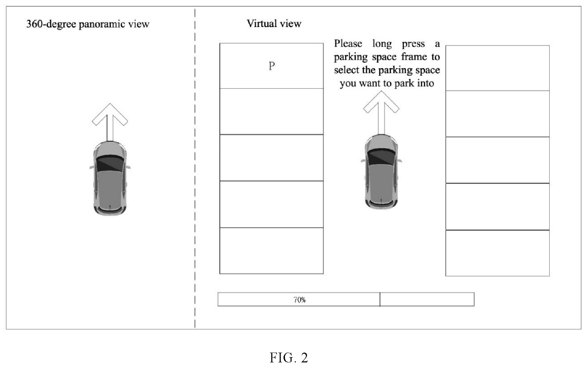

For example, in steps S110 and S120, as shown in FIG. 2, when a virtual view displaying available parking spaces exists, a text prompt is displayed in the virtual view. For example, the content of the text prompt is: Please long press a parking space frame to select the parking space you want to park into. When the user touches the frame corresponding to an available parking space in the virtual view, a progress bar is displayed below the virtual view. When the progress bar reaches the end, the long-press operation is determined to be completed, the target parking space is released, and the parking function is activated. Of course, the means of indicating completion of the long-press operation is not limited to a progress bar. After the available parking space is selected, it may also be indicated, through a flashing border, color change or the like, that in response to the user's long-press operation, the target parking space has been released and the automatic parking function has been activated with the selected parking space as the parking target. Meanwhile, a 360-degree panoramic view of the vehicle is displayed on the display interface to assist the user in parking.

Furthermore, it should be noted that the long-press operation in the present embodiment is a relative description, which reflects that after the user touches the corresponding area, the user needs to wait for an activation prompt to appear in the corresponding area (e.g., the progress bar fills up, or the parking space border flashes or changes color, etc.) with the activation prompt indicating that the parking space is selected and the automatic parking function is activated, and then the user can end the touch/press operation. Therefore, the actual duration of the long press may also be set to be very short.

In step S130, the vehicle is controlled, via the parking function, to park into the target parking space.

In an embodiment of the present application, after the target parking space is determined, a parking path for the vehicle to park into the target parking space is determined via the parking function, and the vehicle is controlled to travel along the parking path until it parks into the target parking space.

In an automatic parking method provided in an embodiment of the present application, first, a virtual view including the available parking space is displayed in response to detecting that an available parking space exists ahead of the vehicle during a traveling process of a vehicle; then, the target parking space is released and a parking function is activated in response to a long-press operation on a target parking space in the virtual view, wherein the target parking space is one of the available parking spaces; and then, the vehicle is controlled via the parking function to park into the target parking space. Through the above method, during a traveling process of a target vehicle, by activating a parking function in response to a long-press operation on an available parking space in a virtual view of a parking scenario, automatic parking is achieved when the vehicle approaches the available parking space, eliminating the need to first stop the vehicle and then activate the parking function as required in existing solutions, and thus improving the user driving experience.

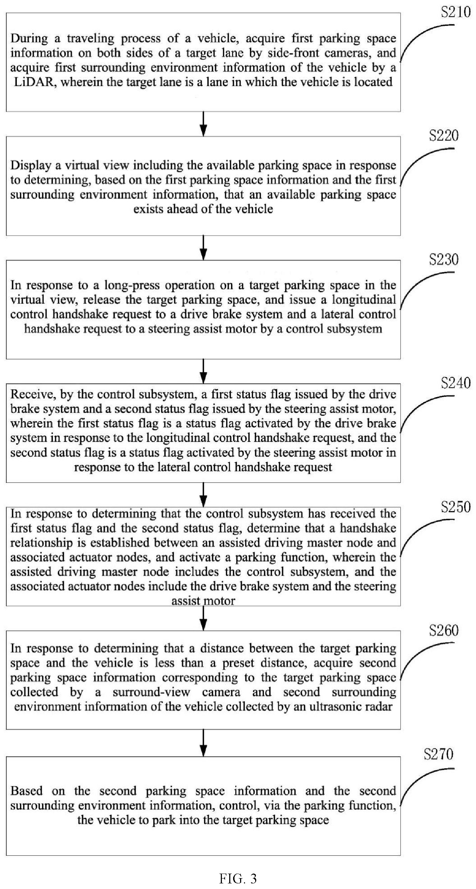

Please refer to FIG. 3. An embodiment of the present application provides an automatic parking method including the following steps.

In step S210, during a traveling process of a vehicle, first parking space information on both sides of a target lane is acquired by side-front cameras and first surrounding environment information of the vehicle is acquired by a LiDAR, wherein the target lane is a lane in which the vehicle is located.

In an embodiment of the present application***,*** during the driving process of the vehicle, according to the detection range of the side-front cameras, first parking space information corresponding to the parking spaces within the detection range is acquired; according to the detection range of the LiDAR, the first surrounding environment information corresponding to the vehicle is acquired. The first parking space information is the parking space information of the parking spaces within the detection range of the side-front cameras; the first surrounding environment information is the environment information within the detection range of the LiDAR, including obstacles on the target lane, the width of the target lane, the distance between two adjacent vehicles parked on either side of the target lane, etc. Here, limited by the performance of current algorithms, the detection range of each of the side-front cameras is approximately 10 meters, and the detection range of the LiDAR is approximately 20 meters.

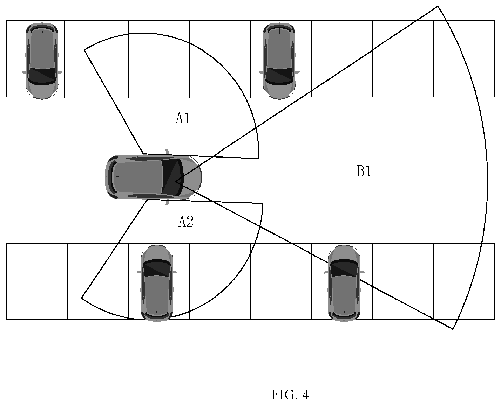

Step S210 may be as shown in FIG. 4. When the vehicle is traveling in a lane, the side-front cameras have detection ranges A1 and A2, respectively, and the LiDAR has a detection range B1. Surrounding environment information corresponding to A1 and A2 is acquired by the side-front cameras, and the first parking space information is determined respectively from the surrounding environment information corresponding to A1 and the surrounding environment information corresponding to A2; the first surrounding environment information corresponding to B1 is acquired by the LiDAR.

In step S220, in response to determining, based on the first parking space information and the first surrounding environment information, that an available parking space exists ahead of the vehicle, a virtual view including the available parking space is displayed.

In an embodiment of the present application, types of parking spaces include line-marked parking spaces and open parking spaces. An available parking space corresponding to a line-marked parking space is an available line-marked parking space, and an available parking space corresponding to an open parking space is an available open parking space. For line-marked parking spaces and available line-marked parking spaces, in response to detecting by the side-front cameras that parking space lines exist on both sides of the target lane, the parking spaces along the target lane are determined to be of the line-marked parking space type. Once acquired by the side-front cameras, the first parking space information is analyzed to determine whether the line-marked parking spaces on both sides of the target lane already have vehicles parked therein. If no vehicle is parked in a line-marked parking space, it is determined to be an available line-marked parking space, and is displayed in the virtual view. For open parking spaces and available open parking spaces, in response to detecting by the side-front cameras that no parking space lines exist on both sides of the target lane, the parking spaces along the target lane are determined to be of the open parking space type. The distance between any two adjacent vehicles parked on either side of the target lane is determined based on the first surrounding environment information, and it is then determined whether this distance is greater than the length of the vehicle driven by the user. In response to determining that the distance is greater than the length of the vehicle, the space corresponding to this distance is determined as an available open parking space, and is displayed in the virtual view.

As an approach, the determination of an available open parking space may also be performed in conjunction with the surrounding environment information acquired by the side-front cameras. However, since the accuracy of determining the distance between two adjacent vehicles by the side-front cameras is not as high as that achieved by the LiDAR, the surrounding environment information acquired by the side-front cameras serves to supplement the first surrounding environment information acquired by the LiDAR in determining an available open parking space.

In step S230, in response to a long-press operation on a target parking space in the virtual view, the target parking space is released, and a longitudinal control handshake request is issued to a drive brake system and a lateral control handshake request is issued to a steering assist motor by a control subsystem.

In an embodiment of the present application, after the user performs a long-press operation on the target parking space in the virtual view, in response to the long-press operation on the target parking space in the virtual view, the target parking space is released, and it is determined that the vehicle ultimately needs to park into the target parking space. Simultaneously, the control subsystem determines that the current vehicle can support activation of a parking function, based on an ADAS (Advanced Driving Assistance System) availability flag issued by the drive brake system. Then, a longitudinal control handshake request is issued to the drive brake system and a lateral control handshake request is issued to the steering assist motor by the control subsystem. The control subsystem is used to control the vehicle's travel, and the drive brake system includes a drive motor and an electric brake system.

In step S240, a first status flag issued by the drive brake system and a second status flag issued by the steering assist motor are received by the control subsystem, wherein the first status flag is a status flag activated by the drive brake system in response to the longitudinal control handshake request, and the second status flag is a status flag activated by the steering assist motor in response to the lateral control handshake request.

In an embodiment of the present application, upon receiving the longitudinal control handshake request issued by the control subsystem, the drive brake system activates the first status flag and issues the first status flag to the control subsystem in response to the longitudinal control handshake request. When the control subsystem receives the first status flag, it may determine that the drive brake system has received and responded to the longitudinal control handshake request. Upon receiving the lateral control handshake request issued by the control subsystem, the steering assist motor activates the second status flag and issues the second status flag to the control subsystem in response to the lateral control handshake request. When the control subsystem receives the second status flag, it may determine that the steering assist motor has received and responded to the lateral control handshake request.

In step S250, in response to determining that the control subsystem has received the first status flag and the second status flag, it is then determined that a handshake relationship is established between an assisted driving master node and associated actuator nodes, and the parking function is activated, wherein the assisted driving master node includes the control subsystem, and the associated actuator nodes include the drive brake system and the steering assist motor.

In an embodiment of the present application, when it is determined that the control subsystem has received the first status flag and the second status flag, it may be determined that a handshake relationship has been established between the assisted driving node and the associated actuator nodes at this point, and the parking function is activated.

As an approach, only after it is determined that the handshake relationship is established between the assisted driving node and the associated actuator nodes, and the parking function is activated, can the vehicle output a target torque to the drive motor via a longitudinal control module in the control subsystem, and output a target deceleration and target gear to the electric brake system, thereby controlling the vehicle's speed and traveling direction, and stabilizing the vehicle's speed within a stable and controllable target speed range during parking. The target speed is limited to within 25 km/h according to actual requirements. Furthermore, only after it is determined that the handshake relationship is established between the assisted driving node and the associated actuator nodes, and the parking function is activated, can the vehicle output a target steering wheel angle to the steering assist motor via a lateral control module in the control subsystem, thereby controlling the vehicle's steering wheel angle and vehicle heading angle.

In step S260, in response to determining that a distance between the target parking space and the vehicle is less than a preset distance, second parking space information corresponding to the target parking space collected by a surround-view camera and second surrounding environment information of the vehicle collected by an ultrasonic radar are acquired.

In an embodiment of the present application***,*** the distance between the vehicle and the target parking space is monitored in real time by the LiDAR. When it is determined that the distance between the center point of the rear axle of the vehicle and the far corner point of the target parking space is less than a preset distance, surrounding environment information collected by the surround-view camera is acquired, and second parking space information corresponding to the target parking space is determined from the environment information. Simultaneously, second surrounding information corresponding to the vehicle collected by the ultrasonic radar is acquired. The second surrounding information is the surrounding information within the detection range of the ultrasonic radar, including obstacles on the target lane, the width of the target lane, and the distance between two adjacent vehicles parked on either side of the target lane. Here, since the ultrasonic radar may acquire information on obstacles within a lateral distance of 3.5-5 meters from either side of the vehicle, and the detection range of the surround-view camera is also approximately 5 meters, the preset distance is set to 5 meters in this solution. The side-front cameras, the LiDAR, the surround-view camera, and the ultrasonic radar all start operating when the vehicle is powered on, but the information collected by the surround-view camera and the ultrasonic radar is acquired only when it is determined that the distance between the vehicle and the target parking space is less than the preset distance.

Of course, the distance between the vehicle and the target parking space may also be sensed by the side-front cameras; however, the distance sensed by the side-front cameras is not as accurate as that acquired by the LiDAR. Alternatively, the distance between the vehicle and the target parking space sensed by the side-front cameras and the distance between the vehicle and the target parking space detected by the LiDAR may be combined to determine the distance relationship between the vehicle and the target parking space through comprehensive consideration.

In step S270, the vehicle is controlled via the parking function to park into the target parking space based on the second parking space information and the second surrounding environment information.

In an embodiment of the present application***,*** after the second parking space information and the second surrounding environment information are determined, a route for parking into the target parking space is planned based on the obstacle information included in the second surrounding environment information and the position information of the target parking space included in the second parking space information. The vehicle is controlled, via the parking function, to travel along the route for parking into the target parking space until the vehicle parks into the target parking space.

Here, the above process may also be accomplished using the side-front cameras and the LiDAR. However, since the detection accuracy of side-front cameras and the LiDAR when detecting nearby objects is lower than that of the surround-view camera and the ultrasonic radar when detecting nearby objects, this solution does not adopt a scheme that accomplishes the above process solely through the side-front cameras and the LiDAR. Similarly, the above process may also be accomplished using the surround-view camera and the ultrasonic radar. However, due to the relatively short detection ranges of the surround-view camera and the ultrasonic radar, when an available parking space is detected by the surround-view camera and the ultrasonic radar, and the user subsequently selects a target parking space from the available parking spaces, the vehicle is already very close to the target parking space after the above operations are completed. Considering the vehicle speed during travel, it is relatively difficult for the vehicle to complete parking without stopping. If the user decelerates until the vehicle comes to a stop, the vehicle may have already passed the target parking space by a certain distance. Moreover, since the detection ranges of the surround-view camera and the ultrasonic radar are relatively short, there may be situations where the target parking space cannot be detected. In such cases, the user needs to reverse the vehicle until the target parking space is within the detection ranges of the surround-view camera and the ultrasonic radar. This approach requires relatively cumbersome steps and has low usage efficiency. Therefore, this solution does not adopt the approach.

In an automatic parking method provided in an embodiment of the present application***,*** through the above method, during a traveling process of a target vehicle, by activating a parking function in response to a long-press operation on an available parking space in a virtual view of a parking scenario, automatic parking is achieved when the vehicle approaches the available parking space, eliminating the need to first stop the vehicle and then activate the parking function as required in existing solutions, and thus improving the user driving experience.

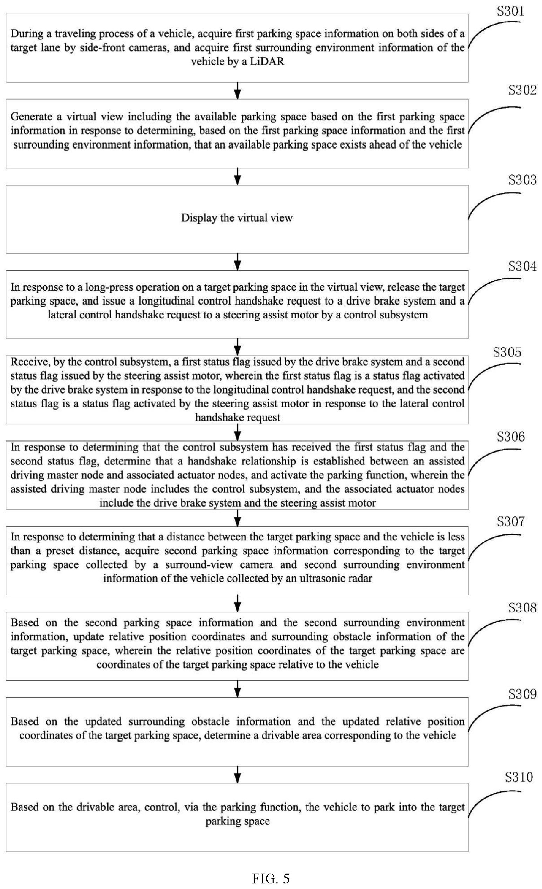

Please refer to FIG. 5. An embodiment of the present application provides an automatic parking method including the following steps.

In step S301, during a traveling process of a vehicle, first parking space information on both sides of a target lane is acquired by side-front cameras, and first surrounding environment information of the vehicle is acquired by a LiDAR.

The detailed explanation in the embodiments above may be specifically referred to for step S301, and thus will not be repeated in the present embodiment.

In step S302, a virtual view including the available parking space is generated based on the first parking space information in response to determining, based on the first parking space information and the first surrounding environment information, that an available parking space exists ahead of the vehicle.

In an embodiment of the present application, available parking spaces include available line-marked parking spaces and available open parking spaces. If the parking spaces along the target lane are line-marked parking spaces, it is determined, based on the acquired first parking space information, whether a vehicle is parked in any line-marked parking space within the detection range of the side-front cameras. If a vehicle is parked therein, the parking space existing ahead of the vehicle is determined to be an unavailable line-marked parking space; if no vehicle is parked therein, the line-marked parking space within the detection range is determined to be an available line-marked parking space. If the parking spaces along the target lane are open parking spaces, it is determined, based on the acquired first parking space information and the first surrounding environment information, whether a distance between any two adjacent vehicles on either side of the target lane is greater than the length of the vehicle. If the distance is less than or equal to the length of the vehicle, the open parking space existing ahead of the vehicle is determined to be an unavailable open parking space. If the distance is greater than the length of the vehicle, the open parking space existing ahead of the vehicle is determined to be an available open parking space. After it is determined that an available parking space exists ahead of the vehicle, the shape and size of the available parking space and the position of the available parking space relative to the vehicle are determined based on the first parking space information, and a virtual view including the available parking space is generated.

Here, unavailable parking spaces existing ahead of the vehicle may also be determined based on the first parking space information, and are displayed in the virtual view. On each unavailable parking space, a vehicle is rendered to indicate that the parking space is an unavailable parking space.

Here, once generated, the virtual view will not be closed even if an unexpected situation causes an available parking space to become an unavailable parking space, for example, a child playing in the available parking space.

As an approach, when generating the virtual view of available parking spaces, a driving top view is generated simultaneously based on the first parking space information and the first surrounding environment information. In this driving top view, with the vehicle as the center, images of obstacles and surrounding vehicles are rendered in the driving top view according to the first surrounding environment information, and are displayed on the display interface in the form of a top view.

In step S303, the virtual view is displayed.

In an embodiment of the present application***,*** the virtual view is displayed on the display interface, and simultaneously, the above-mentioned driving top view is also displayed.

In step S304, in response to a long-press operation on a target parking space in the virtual view, the target parking space is released, and a longitudinal control handshake request is issued to a drive brake system and a lateral control handshake request is issued to a steering assist motor by a control subsystem.

In step S305, a first status flag issued by the drive brake system and a second status flag issued by the steering assist motor are received by the control subsystem, wherein the first status flag is a status flag activated by the drive brake system in response to the longitudinal control handshake request, and the second status flag is a status flag activated by the steering assist motor in response to the lateral control handshake request.

In step S306, in response to determining that the first status flag and the second status flag have been received by the control subsystem, it is determined that a handshake relationship is established between an assisted driving master node and associated actuator nodes, and a parking function is activated, wherein the assisted driving master node includes the control subsystem, and the associated actuator nodes include the drive brake system and the steering assist motor.

In step S307, in response to determining that a distance between the target parking space and the vehicle is less than a preset distance, second parking space information corresponding to the target parking space collected by a surround-view camera, and second surrounding environment information of the vehicle collected by an ultrasonic radar are acquired.

The detailed explanation in the embodiments above can be specifically referred to for steps S304 to S307, and thus will not be repeated in the present embodiment.

In step S308, based on the second parking space information and the second surrounding environment information, relative position coordinates and surrounding obstacle information of the target parking space are updated, wherein the relative position coordinates of the target parking space are coordinates of the target parking space relative to the vehicle.

In an embodiment of the present application, according to the position information between the target parking space and the vehicle included in the second parking space information, a new position of the target parking space relative to the vehicle is determined, and used as the relative position coordinates of the target vehicle, thereby completing the update of the relative position coordinates of the target parking space; obstacle information included in the second surrounding environment information is used as the surrounding obstacle information of the target parking space to complete the update of the surrounding obstacle information of the target parking space.

As an approach, when acquiring, in real time, the second parking space information collected by the surround-view camera and the second surrounding environment information collected by the ultrasonic radar, the distance between the surround-view camera and the target parking space, and the distance between the ultrasonic radar and the target parking space are acquired. The confidence level of the second parking space information is determined based on the distance between the surround-view camera and the target parking space, and the confidence level of the second surrounding environment information is determined based on the distance between the ultrasonic radar and the target parking space. When both the confidence level of the second parking space information and the confidence level of the second surrounding environment information are greater than their respective confidence thresholds, it is determined that the second parking space information and the second surrounding environment information are credible. Based on the second parking space information with the confidence level greater than its confidence threshold and the second surrounding environment information with the confidence level greater than its confidence threshold, the relative position coordinates and the surrounding obstacle information of the target parking space are updated.

In step S309, based on the updated surrounding obstacle information and the updated relative position coordinates of the target parking space, a drivable area corresponding to the vehicle is determined.

In an embodiment of the present application***,*** based on the updated surrounding obstacle information and the updated relative position coordinates of the target parking space, an area without obstacles between the vehicle and the target parking space is determined, and used as the drivable area corresponding to the vehicle.

As an approach, the drivable area of the vehicle is not fixed, since pedestrians may pass by during vehicle travel. The vehicle acquires, in real time, the second parking space information collected by the surround-view camera and the surrounding environment information collected by the ultrasonic radar, and updates the relative position coordinates and the surrounding obstacle information of the target parking space in real time based on the second parking space information and the second surrounding environment information, thereby achieving real-time updating of the vehicle's drivable area. Of course, to reduce computational burden, the vehicle may also acquire, at preset time intervals, the second parking space information collected by the surround-view camera and second surrounding environment information collected by the ultrasonic radar.

In step S310, based on the drivable area, the vehicle is controlled, via the parking function, to park into the target parking space.

In an embodiment of the present application, after the drivable area is determined, the control subsystem is used to control, via the parking function, the vehicle to travel within the drivable area until the vehicle parks into the target parking space.

Here, the specific process of step S310 is shown in steps S3101 and S3102.

In step S3101, the updated surrounding obstacle information is processed to determine a parking route within the drivable area.

In an embodiment of the present application, the updated surrounding obstacle information is processed by a planning subsystem, and a parking route is planned within the drivable area according to the distribution of obstacles around the vehicle. The planning subsystem is a system for planning a parking route within the drivable area.

As an approach, the planning subsystem may also plan a plurality reference parking routes within the drivable area according to the distribution of obstacles around the vehicle, select an optimal reference parking route from the plurality of reference parking routes by considering comfort, safety and time consumption, and use the optimal reference parking route as the parking route in this solution. When an unexpected situation occurs on the parking route, for example, a child is playing on this parking route, then the parking route may be discarded, and an optimal reference parking route may be selected from the remaining plurality of reference parking routes.

In step S3102, the vehicle is controlled, via the parking function, to park into the target parking space based on the parking route.

In an embodiment of the present application, after the parking route is determined, the control subsystem controls the vehicle's speed and traveling direction via the longitudinal control module and controls the vehicle's traveling heading angle via the lateral control module, ensuring that the vehicle travels along the parking route until the vehicle parks into the target parking space.

As an approach, when an unexpected situation occurs while the vehicle is traveling along the parking route, the control subsystem controls the vehicle to brake to a stop, re-plans a parking route based on the current surrounding obstacle information, and controls the vehicle to travel along the new parking route until the vehicle parks into the target parking space.

In an automatic parking method provided in an embodiment of the present application***,*** through the above method, during a traveling process of a target vehicle, by activating a parking function in response to a long-press operation on an available parking space in a virtual view of a parking scenario, automatic parking is achieved when the vehicle approaches the available parking space, eliminating the need to first stop the vehicle and then activate the parking function as required in existing solutions, and thus improving the user driving experience.

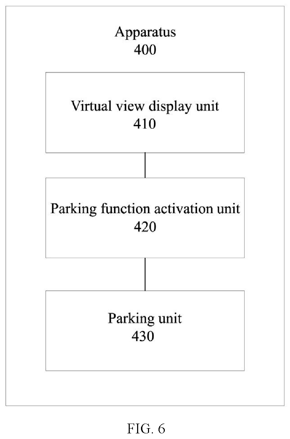

Please refer to FIG. 6. An embodiment of the present application provides an automatic parking apparatus 400 including the following components.

A virtual view display unit 410 is configured to: display a virtual view including the available parking space in response to detecting that an available parking space exists ahead of the vehicle during a traveling process of a vehicle.

As an approach, the virtual view display unit 410 is further configured to: acquire first parking space information on both sides of a target lane by side-front cameras and acquire first surrounding environment information of the vehicle by a LiDAR during a driving process of a vehicle; and display a virtual view including the available parking space in response to determining, based on the first parking space information and the first surrounding environment information, that an available parking space exists ahead of the vehicle.

Optionally, the virtual view display unit 410 is further configured to: generate a virtual view including the available parking space in response to determining, based on the first parking space information and the first surrounding environment information, that an available parking space exists ahead of the vehicle; and display the virtual view.

A parking function activation unit 420 is configured to: release the target parking space, and activate a parking function, in response to a long-press operation on a target parking space in the virtual view, wherein the target parking space is one of the available parking spaces.

As an approach, the parking function activation unit 420 is also configured to: in response to a long-press operation on a target parking space in the virtual view, release the target parking space, and issue, via a control subsystem, a longitudinal control handshake request to a drive brake system and a lateral control handshake request to a steering assist motor; receive, via the control subsystem, a first status flag issued by the drive brake system and a second status flag issued by the steering assist motor, wherein the first status flag is a status flag activated by the drive brake system in response to the longitudinal control handshake request, and the second status flag is a status flag activated by the steering assist motor in response to the lateral control handshake request; in response to determining that the control subsystem has received the first status flag and the second status flag, determine that a handshake relationship is established between an assisted driving master node and associated actuator nodes, and activate the parking function, wherein the assisted driving master node includes the control subsystem, and the associated actuator nodes include the drive brake system and the steering assist motor.

A parking unit 430 is configured to control, via the parking function, the vehicle to park into the target parking space.

As an approach, the parking unit 430 is also configured to: in response to determining that a distance between the target parking space and the vehicle is less than a preset distance, acquire second parking space information corresponding to the target parking space collected by a surround-view camera, and second surrounding environment information of the vehicle collected by an ultrasonic radar; and based on the second parking space information and the second surrounding environment information, control, via the parking function, the vehicle to park into the target parking space.

Optionally, the parking unit 430 is further configured to: update relative position coordinates and surrounding obstacle information of the target parking space based on the second parking space information and the second surrounding environment information, wherein the relative position coordinates of the target parking space are coordinates of the target parking space relative to the vehicle; determine a drivable area corresponding to the vehicle based on the updated surrounding obstacle information and the updated relative position coordinates of the target parking space; and based on the drivable area, control, via the parking function, the vehicle to park into the target parking space.

Optionally, the parking unit 430 is further configured to: process the updated surrounding obstacle information to determine a parking route within the drivable area; and based on the parking route, control, via the parking function, the vehicle to park into the target parking space.

It should be noted that the apparatus embodiment of the present application corresponds to the above-described method embodiments, and the content of the above-described method embodiments may be referred to for the specific principles of the apparatus embodiment and will not be repeated here.

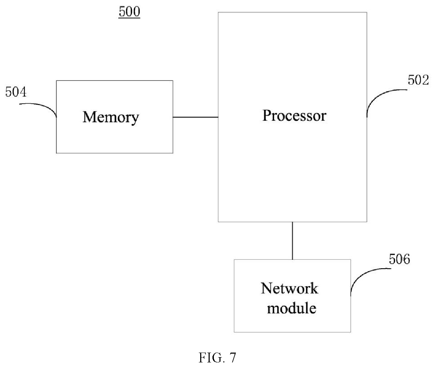

A vehicle provided in the present application will be described below with reference to FIG. 7.

Please refer to FIG. 7. Based on the automatic parking method and the automatic parking apparatus described above, an embodiment of the present application further provides a vehicle 500 capable of performing the above-described automatic parking method. The vehicle 500 includes one or more processors 502 (only one is shown in the figure), a memory 504 and a network module 506 that are coupled to each other. The memory 504 stores programs that can execute the content of the above-described embodiments, and the processor 502 can execute the programs stored in the memory 504.

Here, each processor 502 may include one or more processing cores. The processor 502 uses various interfaces and lines to connect various parts within the entire vehicle 500, and executes various functions of the vehicle 500 and processes data by running or executing instructions, programs, code sets, or instruction sets stored in the memory 504, and by calling data stored in the memory 504. Optionally, the processor 502 may be implemented in at least one of the following hardware forms: digital signal processing (DSP), field-programmable gate array (FPGA), and programmable logic array (PLA). The processor 502 may integrate one, or any combination, of a central processing unit (CPU), a graphics processing unit (GPU), a modem, and the like. Here, the CPU mainly handles an operating system, a user interface, application programs, and the like; the GPU is responsible for rendering and drawing display content; and the modem is used for processing wireless communications. It can be understood that the above-mentioned modem may not be integrated into the processor 502, and may be implemented separately as a single communication chip.

The memory 504 may include a random access memory (RAM) or a read-only memory. The memory 504 can be used to store instructions, programs, codes, code sets, or instruction sets. The memory 504 may include a program storage area and a data storage area. Here, the program storage area may store instructions for implementing an operating system, instructions for implementing at least one function (such as a touch control function, a sound playback function, an image playback function, etc.), instructions for implementing the various method embodiments described below, and other instructions. The data storage area may also store data (such as a phone book, audio and video data, chat history data, and the like) created during the use of the vehicle 500.

The network module 506 is configured to receive and transmit electromagnetic waves, and realize mutual conversion between electromagnetic waves and electrical signals, thereby communicating with a communication network or other devices, for example, communicating with an audio playback device. The network module 506 may include various existing circuit elements for performing these functions, such as an antenna, a radio frequency transceiver, a digital signal processor, an encryption/decryption chip, a subscriber identity module (SIM) card, a memory, and the like. The network module 506 may communicate with various networks such as the Internet, an intranet, and a wireless network, or communicate with other devices via a wireless network. The above-mentioned wireless network may include a cellular telephone network, a wireless local area network (WLAN), or a metropolitan area network (MAN). For example, the network module 506 can exchange information with a base station.

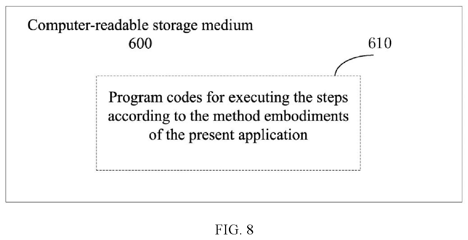

Please refer to FIG. 8, which shows a structural block diagram of a computer-readable storage medium in an embodiment of the present application. Program codes are stored in a computer-readable storage medium 600, and can be called by a processor to execute the methods described in the above method embodiments.

The computer-readable storage medium 600 may be an electronic memory such as a flash memory, an EEPROM (electrically erasable programmable read-only memory), an EPROM, a hard disk, or a ROM. Optionally, the computer-readable storage medium 600 includes a non-transitory computer-readable storage medium. The computer-readable storage medium 600 has storage space for program codes 610 that are used for executing any of the method steps in the above methods. These program codes can be read from or written into one or more computer program products. The program codes 610 can be compressed, for example, in an appropriate form.

The present application provides an automatic parking method, an apparatus, a vehicle, and a storage medium. The method includes: displaying a virtual view including the available parking space in response to detecting that an available parking space exists ahead of the vehicle during a traveling process of a vehicle; releasing the target parking space and activating a parking function in response to a long-press operation on a target parking space in the virtual view, wherein the target parking space is one of the available parking spaces; and controlling, via the parking function, the vehicle to park into the target parking space. During a traveling process of a target vehicle, by activating a parking function in response to a long-press operation on an available parking space in a virtual view of a parking scenario, automatic parking is achieved when the vehicle approaches the available parking space, eliminating the need to first stop the vehicle and then activate the parking function as required in existing solutions, and thus improving the user driving experience.

The embodiments of the present disclosure have been described above with reference to the accompanying drawings. However, the present disclosure is not limited to the specific embodiments described above, which are merely illustrative and not restrictive. Inspired by the present disclosure, those of ordinary skill in the art can make many other forms without departing from the gist of the present disclosure and the scope claimed by the claims, all of which fall within the protection scope of the present disclosure.

## Claims

1. An automatic parking method, **characterized in that** the method comprises:
displaying a virtual view comprising the available parking space in response to detecting that an available parking space exists ahead of the vehicle during a traveling process of a vehicle;
releasing the target parking space and activating a parking function in response to a long-press operation on a target parking space in the virtual view, wherein the target parking space is one of the available parking spaces; and
controlling, via the parking function, the vehicle to park into the target parking space.

2. The method according to claim 1, **characterized in that** the displaying a virtual view comprising the available parking space in response to detecting that an available parking space exists ahead of the vehicle during a traveling process of a vehicle comprises:
during a traveling process of a vehicle, acquiring first parking space information on both sides of a target lane by side-front cameras, and acquiring first surrounding environment information of the vehicle by a LiDAR, wherein the target lane is a lane in which the vehicle is located; and
displaying a virtual view comprising the available parking space in response to determining, based on the first parking space information and the first surrounding environment information, that an available parking space exists ahead of the vehicle.

3. The method according to claim 2, **characterized in that** the displaying a virtual view comprising the available parking space in response to determining, based on the first parking space information and the first surrounding environment information, that an available parking space exists ahead of the vehicle comprises:
generating a virtual view comprising the available parking space based on the first parking space information in response to determining, based on the first parking space information and the first surrounding environment information, that an available parking space exists ahead of the vehicle; and
displaying the virtual view.

4. The method according to claim 1, **characterized in that** the releasing the target parking space and activating a parking function in response to a long-press operation on a target parking space in the virtual view comprises:
releasing the target parking space, and issuing a longitudinal control handshake request to a drive brake system and a lateral control handshake request to a steering assist motor by a control subsystem, in response to a long-press operation on a target parking space in the virtual view;
receiving, by the control subsystem, a first status flag issued by the drive brake system and a second status flag issued by the steering assist motor, wherein the first status flag is a status flag activated by the drive brake system in response to the longitudinal control handshake request, and the second status flag is a status flag activated by the steering assist motor in response to the lateral control handshake request; and
determining that a handshake relationship is established between an assisted driving master node and associated actuator nodes, and activating a parking function, in response to determining that the control subsystem has received the first status flag and the second status flag, wherein the assisted driving master node comprises the control subsystem, and the associated actuator nodes comprise the drive brake system and the steering assist motor.

5. The method according to claim 1, **characterized in that** the controlling, via the parking function, the vehicle to park into the target parking space comprises:
acquiring second parking space information corresponding to the target parking space collected by a surround-view camera and second surrounding environment information of the vehicle collected by an ultrasonic radar in response to determining that a distance between the target parking space and the vehicle is less than a preset distance; and
controlling, via the parking function, the vehicle to park into the target parking space based on the second parking space information and the second surrounding environment information.

6. The method according to claim 5, **characterized in that** the controlling, via the parking function, the vehicle to park into the target parking space based on the second parking space information and the second surrounding environment information comprises:
updating relative position coordinates and surrounding obstacle information of the target parking space based on the second parking space information and the second surrounding environment information, wherein the relative position coordinates of the target parking space are coordinates of the target parking space relative to the vehicle;
determining a drivable area corresponding to the vehicle based on the updated surrounding obstacle information and the updated relative position coordinates of the target parking space; and
controlling, via the parking function, the vehicle to park into the target parking space based on the drivable area.

7. The method according to claim 6, **characterized in that** the controlling, via the parking function, the vehicle to park into the target parking space based on the drivable area comprises:
processing the updated surrounding obstacle information to determine a parking route within the drivable area; and
controlling, via the parking function, the vehicle to park into the target parking space based on the parking route.

8. An automatic parking apparatus, **characterized in that** the apparatus comprises:
a virtual view display unit configured to display a virtual view comprising the available parking space in response to detecting that an available parking space exists ahead of the vehicle during a traveling process of a vehicle;
a parking function activation unit configured to release the target parking space and activate a parking function in response to a long-press operation on a target parking space in the virtual view, wherein the target parking space is one of the available parking spaces; and
a parking unit configured to control, via the parking function, the vehicle to park into the target parking space.

9. A vehicle, **characterized by** comprising one or more processors and a memory, wherein one or more programs are stored in the memory and configured to be executed by the one or more processors to perform the method of any one of claims 1 to 7.

10. A computer-readable storage medium, **characterized by** storing program codes comprising instructions for performing the method of any one of claims 1 to 7.
